# FASCICULE DE BREVET EUROPEEN

(11) **EP 2 917 765 B1**
(45) Date de publication et mention de la délivrance du brevet: **15.04.2020**
(21) Numéro de dépôt: 13808071.8
(22) Date de dépôt: 08.11.2013
(51) Int. Cl.: G01T 1/164

(54) **SYSTEME ET PROCEDE DE DETECTION DE RAYONNEMENT GAMMA DE TYPE GAMMA CAMERA**
SYSTEM UND VERFAHREN ZUR DETEKTION VON GAMMASTRAHLUNG, WIE EINE GAMMAKAMERA
SYSTEM AND METHOD FOR DETECTING GAMMA RADIATION, SUCH AS A GAMMA CAMERA

(30) Priorité: 08.11.2012 FR 1260596
(43) Date de publication de la demande: 16.09.2015
(73) Titulaire: Iltis, Alain, 10000 Troyes (FR)
(72) Inventeur: Iltis, Alain, 10000 Troyes (FR)
(74) Mandataire: Debay, Damien
(86) Numéro de dépôt international: PCT/FR2013/052672
(87) Numéro de publication internationale: WO 2014/072648

(56) Documents cités:
- EP-A1- 2 293 112
- US-A- 5 841 140
- US-B1- 7 180 074
- STEFAN SEIFERT ET AL: "Paper;Monolithic LaBr3:Ce crystals on silicon photomultiplier arrays for time-of-flight positron emission tomography;Monolithic LaBr3:Ce crystals on silicon photomultiplier arrays for time-of-flight positron emission tomography", PHYSICS IN MEDICINE AND BIOLOGY, INSTITUTE OF PHYSICS PUBLISHING, BRISTOL GB, vol. 57, no. 8, 29 mars 2012 (2012-03-29), pages 2219-2233, XP020220785, ISSN: 0031-9155, DOI: 10.1088/0031-9155/57/8/2219 cité dans la demande
- ANTON G ET AL: "3D-Position-Sensitive Compact Scintillation Detector as Absorber for a Compton-Camera", IEEE TRANSACTIONS ON NUCLEAR SCIENCE, IEEE SERVICE CENTER, NEW YORK, NY, US, vol. 52, no. 3, 1 juin 2005 (2005-06-01), pages 606-611, XP011136825, ISSN: 0018-9499, DOI: 10.1109/TNS.2005.851454

## Description

### DOMAINE TECHNIQUE DE L'INVENTION

L'invention se rapporte à l'imagerie de sources de rayons gamma. Plus particulièrement, l'invention concerne un système de détection de rayons gamma dérivés d'une gamma caméra, ainsi que le procédé de reconstitution de l'image mise en place dans un tel système. L'invention concerne en outre l'application du système de détection dans le domaine notamment de l'astronomie et du médical, ainsi que l'application dudit système à un système d'imagerie de type PET ou SPECT.

**A** l'heure actuelle, l'imagerie de sources de rayons gamma (>30 KeV) s'effectue essentiellement à des fins de diagnostic médical autour de deux techniques : Le PET et le SPECT.

La technique SPECT (Single Photon Emission Computerized Tomography), utilise le principe de l'imagerie par émission. On cherche ici à suivre la distribution de traceurs radioactifs qui émettent des photons gamma monoénergétiques à l'intérieur d'un objet à analyser. L'émission des photons étant isotrope, on place un collimateur devant la caméra pour sélectionner la direction entrante des photons. Le rayon gamma est ensuite transformé en photons UV dans une plaque, épaisse de 10 à 20 mm, d'un cristal scintillant tel que Nal :TI. Les photons UV sont émis de manière isotrope puis canalisés par réflexion sur les interfaces de la plaque de cristal. De ce fait la distribution d'intensité lumineuse est une tache dont l'intensité décroît en 1/R. La logique d'Anger consiste à déterminer par des photo-détecteurs notamment de type photo-multiplicateurs, le barycentre de la tache lumineuse. On en déduit l'endroit où le rayonnement gamma a été détecté. Dans cette technique la segmentation des photos-détecteurs en deçà de 50 mm n'apporte pas de surcroit de résolution spatiale.

La technique PET (Positron Electron Tomography) nécessite une source de positrons. On détecte deux rayons gamma de 511 KeV émis en anti-coïncidence au moyen de matrices de cristaux scintillants denses disposés en anneaux autour de la source (BGO, LSO, LaBr3). Le système de détection est constitué de matrices de monocristaux (typiquement 4*4*25 mm) qui sont lues par un photo-détecteur (Photomultiplicateur ou Si-PMT) multi-canal, la taille des canaux étant adaptée à la taille du cristal. On a ensuite un étage d'amplification et de traitement du signal souvent en électronique discrète.

### ETAT DE LA TECHNIQUE ANTERIEURE

Dans la technique PET actuelle on différencie une vraie interaction du bruit due à la diffusion Compton au moyen des caractéristiques suivantes : les deux pixels qui ont été activés sont aux antipodes de l'anneau ; l'énergie de l'interaction correspond à 511 KeV; de plus les deux photons touchent le détecteur sensiblement au même instant. Cette technique n'est applicable qu'avec des scintillateurs dont le temps de montée au pic de lumière est rapide tels que LSO, LaBr3 voire BGO.

Un des inconvénients de cette technique est qu'il est coûteux de segmenter les cristaux en pixels, particulièrement pour les cristaux hygroscopiques. Par ailleurs, cette segmentation dégrade la résolution en énergie. Enfin, cette technologie ne fonctionne convenablement qu'avec des cristaux très denses pour éviter l'effet Compton (BGO = Bismuth Germanate ; LSO ou LYSO = Silicate de Lutétium). Ceci implique l'utilisation de matières premières rares et onéreuses (Germanium, Lutétium...).

Dans la technique SPECT, on détecte un seul photon, dont l'énergie varie selon le radio isotope utilisé (de 100 KeV à 1000 KeV), au moyen d'une plaque de cristal scintillant (Nal, Csl, LaBr3) et qui est lue par des photodétecteurs (PMT) de grandes dimensions. Pour avoir une indication sur la direction d'incidence du photon, il est nécessaire d'avoir devant le cristal de gros collimateurs en plomb, encombrants, lourds et qui arrêtent une grande part du rayonnement émis. Par ailleurs, la résolution spatiale du SPECT est inférieure à celle du PET du fait d'une imprécision dans la localisation de l'interaction.

Deux autres problèmes sont à résoudre pour le SPECT:
- le SPECT ne fonctionne que si la plaque de scintillateur est continue. Par conséquent, on ne peut pas coller deux petites plaques pour construire une plus grande. C'est pourquoi, l'utilisation de la nouvelle génération de scintillateurs, LaBr3, dont les cristaux sont assez petits (diamètre maximum 100 mm) est aujourd'hui très limitée pour le SPECT ;
- lorsque deux photons gamma interagissent avec la plaque scintillante à des instants voisins (300 ns environ) l'image de la tache et la mesure de l'énergie sont très perturbés, donc les événements sont rejetés. Dans ce cas, on dit qu'il y a du pile up.

Le PET fonctionne sur un principe différent : un radio élément émet un positron qui se désintègre en 2 photons gamma de 511 KeV émis à 180°. On détecte alors sur un anneau de cristaux situé autour du patient l'arrivée en coïncidence de 2 photons de 511 KeV. Si on a un scintillateur suffisamment rapide, on peut arriver à améliorer la précision de la localisation de l'événement via le Time of flight (différence entre le temps d'arrivée des 2 photons aux deux extrémités opposées de l'anneau. Cependant les systèmes actuels présentent les problèmes suivants : 1) le scintillateur doit être segmenté en pixels (4*4*30 mm par exemple) ce qui est coûteux, 2) si l'on ne sait pas à quelle profondeur a eu lieu l'interaction dans le pixel, cela peut induire une incertitude géométrique qui dégrade la qualité de l'image.Cela dégrade en outre la précision de la mesure du Time of Flight, la limitant effectivement autour de 250 ps. Un exemple de caméra gamma est décrit dans le document US5841140. Ce document divulgue un système de détection de rayon gamma, de type gamma caméra, comprenant une source de rayon gamma, au moins une plaque de scintillateur, présentant une épaisseur supérieure ou égale à10 mm, équipée de photo-détecteurs caractérisé en ce que la lecture des photos-détecteurs est effectuée par une micro-électronique de lecture dédiée de type ASIC, en ce que le détecteur est segmenté et en ce que sur ladite plaque, chaque segment dudit détecteur est apte à mesurer un premier trigger T1, correspondant à l'instant d'impact du premier photon émis par scintillation sur ladite plaque, et une distribution spatiale des triggers voisins permettant de situer spatialement un événement selon des coordonnées.

Des systèmes on été proposés pour mesurer la DOI sur le PET, mais ils sont soit peu convaincants, soit très onéreux (deux couches de détecteurs).

De plus, la difficulté à traiter les événements Compton conduit à rechercher des scintillateurs très denses généralement à base de Lutétium qui sont très coûteux.

L'objet principal de l'invention est donc de proposer une nouvelle technique permettant pour le SPECT :
1) d'améliorer la résolution spatiale;
2) d'augmenter de manière significative le contraste des images ;
3) de pouvoir utiliser via une dé-convolution adéquate deux événements voisins qui seraient rejetés pour Pile-up ;
4) de pouvoir lire de manière adéquate des événements sur une plaque composée de petits morceaux collés entre eux et
5) de permettre une remise à niveau du parc d'équipements SPECT existants puisque le volume total des éléments collimateurs/cristal scintillant/électronique de traitement est avantageusement inférieur au volume des détecteurs actuels.

Le système de détection peut en outre fonctionner de la même manière sans collimateur pour la modalité PET. Dans le contexte du PET ses avantages sont les suivants :
1) Obtenir une forte résolution spatiale (<5 mm) sans qu'il soit nécessaire de segmenter le scintillateur
2) Mesurer la profondeur d'interaction dans le scintillateur avec une seule couche de photo-détecteurs
3) Améliorer la précision du Time of Flight par une correction très précise du temps de vol
4) Obtenir des performances optimum avec des scintillateurs relativement moins couteux.

### EXPOSE DE L'INVENTION

L'invention vise à proposer un système de détection de rayon gamma selon la revendication 1, de type gamma caméra, comprenant une source de rayon gamma, au moins une plaque de scintillateur rapide P1 dont le temps de montée au pic de lumière est inférieur à 1ns avec une face de rentrée diffusante et une face de sortie polie, présentant une épaisseur supérieure ou égale à 10 mm, équipée de photo-détecteurs et d'une micro-électronique de lecture dédiée caractérisé en ce que la micro-électronique de lecture dédiée est de type ASIC, en ce que le détecteur est segmenté, en ce que sur ladite plaque P1, chaque segment dudit détecteur est apte à mesurer un premier trigger T1, correspondant à l'instant d'impact du premier rayon UV émis par scintillation sur ladite plaque P1 de telle sorte qu'une résolution temporelle inférieure soit inférieure à 100ps, de préférence inférieure à 20ps, en ce que le détecteur est apte à mesurer une distribution spatiale et temporelle des premiers photons voisins émis par un événement sur les détecteurs pendant une durée supérieure à 100 ps et inférieure ou égale au temps de montée au pic de lumière du scintillateur permettant ainsi de situer spatialement ledit événement « e1 » de coordonnées (X1, Y1) et en ce que le détecteur est en outre apte à exploiter les différences de répartition spatiales et temporelles entre des photons non diffusés et des photons diffusés afin de reconstituer les coordonnées spatio-temporelles (X,Y,Z, T) dudit événement de scintillation.

Par trigger, on entend l'instant d'impact du rayon gamma sur une plaque du scintillateur.

En effet, le photo-détecteur et son électronique de lecture dédiée sont capables de détecter les premiers photons incidents avec une très forte résolution temporelle et avec une dispersion de la réponse temporelle /canal inférieure à 100 ps, de préférence inférieure à 20 ps pour chaque canal. On mesure l'écart entre le premier trigger de l'événement et les triggers des canaux adjacents dans un rayon égal à 2 fois l'épaisseur de la plaque. On obtient une distribution spatiale des retards (X, Y, DT) dont on calcule par des méthodes statistiques le minimum. L'événement e1 est localisé sur la normale de ce minimum.

Le lieu de l'événement est en effet situé sur la normale du minimum de la distribution des triggers.

En outre, les photons non diffusés sont les premiers photons détectés et ils sont répartis à l'intérieur d'un disque dont le rayon dépend d'une profondeur d'interaction (Z) et dont le centre représente une position (X, Y) de l'événement.

De plus, le détecteur est apte à mesurer l'instant exact de l'interaction T en reconstituant une trajectoire dans le scintillateur des dix premiers photons détectés.

Selon une variante de l'invention la plaque P1 est de type Halogénure de Lanthanide, équipée de photo-détecteurs segmentés avec un pas au moins inférieur à la moitié de son épaisseur, de préférence inférieur à 4 mm et dont la micro-électronique de lecture dédiée de type ASIC comprend une partie analogique ayant une résolution temporelle par canal, pour des triggers inférieure à 50 ps.

De préférence, le détecteur est apte à mesurer en outre une distribution spatiale de la luminosité A1 en (X'1, Y'1) et l'intégrale de l'énergie E1 comme dans une gamma caméra classique.

Par ailleurs, le détecteur est un détecteur à semi-conducteur de type SI-PMT ou APD.

En effet, la mesure de chaque pixel dans le détecteur (par exemple de Si-PMT) est effectuée au moyen de composants micro-électroniques de type ASIC mixtes analogiques/digital dédiés, de manière à permettre une détection très rapide des premiers photons.

Selon une variante de l'invention, le système comporte une multitude de plaques de scintillateurs collées bord à bord, afin de former une grande surface et de corriger les effets de bord, ladite surface peut être soit un plan pour une application SPECT soit un anneau pour une application PET.

Selon un autre mode de réalisation, le système de détection comprend en outre une seconde plaque de scintillateur P2 d'une épaisseur permettant d'absorber au moins 80% de l'énergie du rayon gamma, ladite seconde plaque étant séparée de la première plaque P1 par une distance 'D' d'au moins 10 mm ; le système comporte en outre un module d'estimation permettant de déterminer un événement valide, un module d'estimation de la déviation Compton ; il est apte à mesurer sur ladite seconde plaque P2 un premier trigger T2, une distribution spatiale des triggers permettant de situer spatialement un événement « e2 » en (X2, Y2, Z2), une distribution spatiale de la luminosité A2 en (X'2, Y'2) ainsi que l'énergie E2 émise lors de l'événement « e2 » dans ladite plaque P2 ; et ladite deuxième plaque P2 permet d'obtenir des informations sur le trajet du rayon gamma sans en rejeter aucun.

Avantageusement, le système de détection comprend un module de calcul de l'événement valide, dans lequel les vecteurs des distributions temporelles, l'instant d'impact de rayon gamma sur les plaques, et les vecteurs des distributions spatiales sont croisés afin d'améliorer la précision de la localisation de l'interaction dans lesdites plaques.

Avantageusement, les plaques (P1) ou (P1 et P2), les photodétecteurs et les composants électroniques sont disposés dans une enceinte étanche.

Avantageusement, l'ensemble « Plaques /Photodétecteurs/électronique de traitement » présente un volume inférieur aux détecteurs à base de plaque Nal, de telle sorte que ledit ensemble peut être installé sur des machines SPECT existantes.

Etant donné la plus grande compacité des détecteurs et de l'électronique de traitement vis-à-vis d'une caméra classique, un tel système pourra aisément remplacer les dispositifs existants sur les caméras connues.

L'invention concerne encore un procédé de reconstitution de l'image selon la revendication 10 mis en oeuvre dans le système ci-dessus caractérisé par les étapes suivantes : sur la plaque P1 lors de l'impact d'un photon gamma:
- mesurer un premier trigger T1, correspondant à l'instant d'impact du premier photon UV sur le plan des détecteurs segmentés sur ladite plaque P1 ;
- mesurer une distribution spatiale et temporelle des triggers voisins, sur le plan des photodétecteurs, afin de situer spatialement un événement « e1 » en (X1, Y1) sur la normale du minimum de la distribution des triggers ;
- mesurer en outre une distribution spatiale de la luminosité A1 en (X'1, Y'1) et l'intégrale de l'énergie E1 comme dans une gamma caméra classique.

L'invention concerne en outre un procédé de détection qui comprend -les étapes suivantes :
sur la plaque P2 :
- mesurer un premier trigger T2 ;
- mesurer une distribution spatiale et temporelle des triggers afin de situer spatialement l'événement « e2 » en (X2, Y2, Z2) ;
- mesurer une distribution spatiale de la luminosité A2 en (X'2, Y'2) ainsi que l'énergie E2 émise lors de l'événement « e2 » dans ladite plaque P2 ;
- déterminer un événement valide à l'aide de module d'estimation en effectuant les deux tests suivants :
   a) T2 = T1 + temps de propagation de la lumière entre e1 et e2
   b) E1 + E2 = Energie du radio-isotope utilisé ;
- déterminer la déviation Compton d'angle « alpha » avec une précision dα par rapport à la direction initiale du rayon gamma, le ratio des énergies (E1/E1+E2) permet d'estimer la déviation Compton;
- définir des informations sur le trajet du rayon gamma.

L'invention concerne encore l'application du système ci-dessus à un système d'imagerie médicale de type SPECT ou de type PET, ainsi que précisé dans la revendication 11.

L'invention vise en outre l'utilisation du système défini ci-dessus dans des domaines dans lesquels le nombre de photon gamma à détecter est faible, tels que l'astronomie, ainsi que précisé dans la revendication 12.

### BREVE DESCRIPTION DES FIGURES

D'autres caractéristiques, détails et avantages de l'invention ressortiront à la lecture de la description qui suit, en référence aux figures annexées, qui illustrent:
- la figure 1, montre le principe de l'émission de deux photons gamma dans la technique PET classique ;
- la figure 2A montre le principe de la technique SPECT classique ;
- la figure 2B présente l'intensité lumineuse mesurée par les photo-détecteurs adjacents à un événement et la figure 2C montre le barycentre de la tache lumineuse ;
- la figure 3A montre le principe de la technique SPECT temporel et le temps arrivé du premier photon ;
- la figure 3B est un diagramme illustratif de la figure 3A ;
- les figures 4A et 4B illustrent une comparaison de l'effet de bord dans le cas de SPECT classique (5A) et le SPECT temporel (5B) ;
- la figure 5 montre un mode de réalisation de l'invention avec 2 plaques de scintillateurs ; et
- La figure 6 montre le système à deux plaques de scintillateur pour détecter les rayons gamma émis avec un angle inférieur ou égal à 45°

### DESCRIPTION DETAILLEE

Le principe des explorations scintigraphiques est de déterminer, et de visualiser sous forme d'images, la biodistribution dans l'organisme, d'un élément radiopharmaceutique préalablement injecté à un patient. Pour cela, on a besoin d'un système de détection de radioactivité capable de repérer la présence des molécules marquées mais également de les localiser dans l'espace tridimensionnel (tomographie).

De tels matériaux marqueurs existent : il s'agit par exemple du cristal de iodure de sodium (Nal) dopé au thallium. Ce cristal est actuellement l'élément fondamental de toute la chaîne de détection. En effet, le thallium absorbe les photons émis par le Nal et « réémet » une fraction constante sous forme de photons ultra-violets de 3eV pour lesquels le cristal est transparent. Il faut noter que dans le cristal, il y une perte considérable de l'émission des photons lumineux. À ce stade, il faut convertir les photons lumineux en courant électrique. Ceci est possible grâce à un appareil appelé photomultiplicateur. Les signaux électriques qui sortent du photomultiplicateur peuvent alors être traités par un système électronique et l'information devient exploitable.

Concernant les caméras de type PET (Positron Electron Tomography), elles nécessitent une source de positrons. Comme expliqué ci-dessus, de façon connue on détecte deux rayons gamma de 511 KeV émis en anti-coïncidence au moyen de matrices de cristaux scintillants (BGO, LSO, LaBr3) disposés en anneaux autour de la source positron. La caméra de type PET est constituée d'une matrice monocristaux, typiquement 4*4*25 mm, lus par un photo-détecteur, photomultiplicateur ou Si-PMT, multi canal ; la taille des canaux est souvent adaptée à la taille du cristal. On a ensuite un étage d'amplification et de traitement du signal, souvent en électronique discrète. Dans de telles caméras, on distingue une vraie interaction du bruit due à la diffusion compton. Via les caractéristiques suivantes :
- les 2 pixels activés sont disposés aux antipodes de l'anneau ;
- l'énergie de l'interaction correspond à 511 KeV; et
- les 2 photons touchent le détecteur au même instant à 1 ns (nanoseconde) près. Avec des scintillateurs rapides tels que LSO, LaBr3, on peut même en mesurant la différence entre le temps d'impact des côtés opposés de l'anneau, déduire la position de l'interaction ; ceci est la modalité Time of Flight. Cette caractéristique est décrite dans l'article « Monolithic LaBr3 :Ce crystals on silicon photomultiplier arrays for time of flight positron emission tomography » ' Stefan Seifert, Herman T van Dam, ...' publié le 29 mars 2012*.*

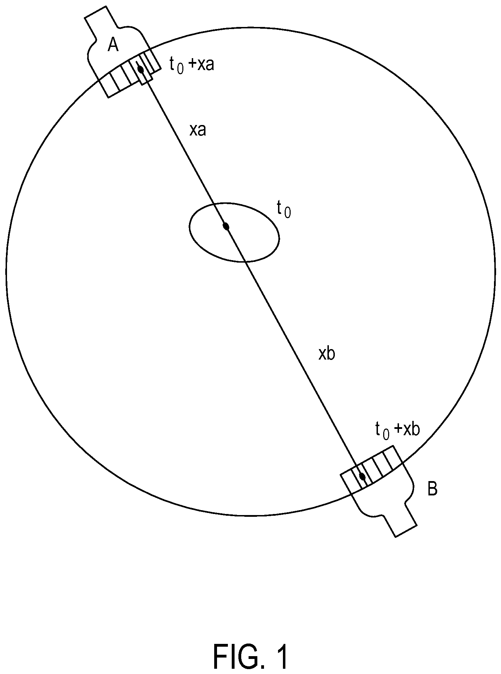

Le principe de la technique 'PET' est illustré sur la figure 1, dans laquelle, t0 est le moment d'émission de deux photons y(gamma) de 511 Kev chacun. Ces photons sont détectés par deux détecteurs opposés en coïncidence. Dans ce cas l'événement a lieu sur la droite AB, et les deux photons touchent les détecteurs au même instant. Le time of flight est équivalent à (t0+ Xb) - (t0+ Xa). On déduit que l'événement est décentré de Xb - Xa du centre du cercle, où Xb est la distance parcourue entre le moment d'émission du rayon gamma γ et le moment où ledit rayon touche un détecteur en un point B. De même Xa est la distance parcourue entre le moment d'émission du rayon γ et le moment où ledit rayon touche un autre détecteur en un point A de la droite. Le segment de droit AB est environ 400 ps équivalent à 12 cm.

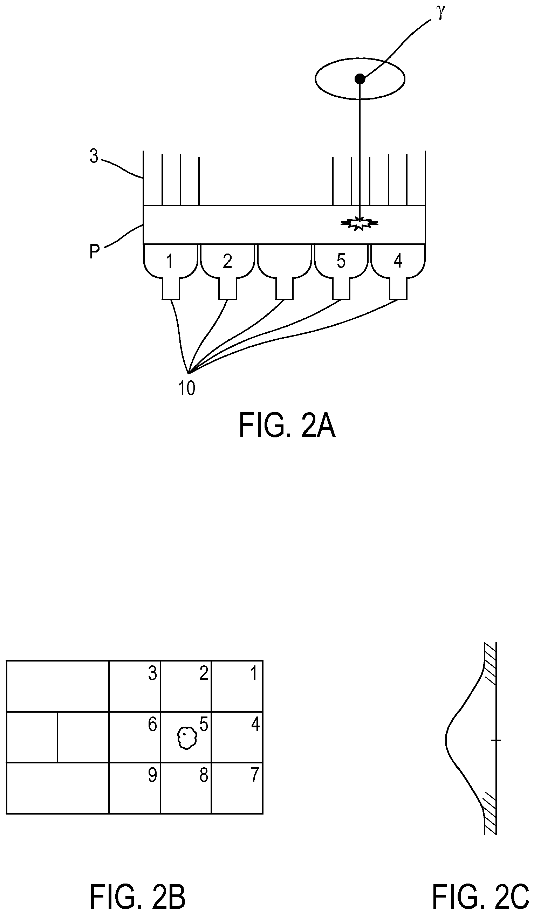

Dans la tomographie à émission mono-photonique SPECT (Single Photo-Electron Computed Tomography) dont le principe est schématisé sur la figure 2, on détecte un seul photon, dont l'énergie varie selon le radio isotope utilisé (de 100 KeV à 1000 KeV), au moyen d'une plaque de cristal scintillant (Nal, Csl, LaBr3) qui est lue par de gros photo-détecteurs (PMT). Pour avoir une indication sur la direction d'incidence du photon, il est nécessaire de placer devant le cristal de gros collimateurs en plomb, encombrants, lourds et qui arrêtent une grosse part du rayonnement émis et de part leurs dimensionnement géométrique, on ne dispose que de très peu de photons pour construire une image. De plus, la résolution spatiale du SPECT est inférieure à celle du PET du fait d'une imprécision dans la localisation de l'interaction.

Le système selon l'invention permet :
1) d'améliorer la résolution spatiale pour le SPECT à géométrie constante ;
2) d'éviter d'avoir à segmenter les cristaux pour le PET tout en conservant une bonne résolution spatiale ;
3) d'améliorer la résolution en énergie pour le SPECT ; et enfin
4) dans un mode de réalisation à deux plaques, de se passer des collimateurs en plomb en conservant une caméra dans une logique d'Anger.

Aujourd'hui lorsqu'un photon gamma interagit avec une plaque de scintillateur continue et de bonne qualité optique, on compare l'intensité lumineuse mesurée par les photo-détecteurs adjacents à l'événement. Pour cela, on en déduit le barycentre de la tache lumineuse, lieu où est censée se produire l'interaction. L'énergie globale déposée est également mesurée afin de rejeter les événements non valides.

La figure 2A, montre l'interaction du photon γ avec une plaque P de scintillateur Nal :Ti d'environ 10 à 20 mm d'épaisseur. Un collimateur 3 à trous parallèles permet la sélection des rayonnements γqui frappent ce collimateur de façon perpendiculaire à sa surface. Plusieurs photomultiplicateurs PMT 10 sont placés afin de mesurer l'intensité lumineuse. Les photomultiplicateurs 10 servent à convertir le signal optique en signal électrique. Ces dispositifs agissent comme des amplificateurs et sont relativement volumineux. On ne peut donc pas en mettre autant que de pixels requis dans l'image finale. Pour déterminer la position précise de scintillation il faut faire de l'interpolation entre les photomultiplicateurs. Lesdits PMT (photomultiplicateurs) 10, sont constitués de tubes vides d'environ 76 mm de diamètre.

Par ailleurs, la résolution spatiale n'est pas seulement limitée par le nombre de dispositifs détecteurs, mais aussi par le nombre de photons de scintillation et l'extension de la surface sur laquelle ils sont détectés. En effet, le principe de positionnement utilise le calcul du «barycentre», et permet d'obtenir une résolution spatiale inférieure à la dimension des photomultiplicateurs. Le positionnement étant déterminé statistiquement, le nombre de photons observés va limiter la précision de l'estimation (figure 2B). La figure 2C présente le barycentre de la tache lumineuse, celui-ci est le lieu de l'interaction. La résolution spatiale est d'environ 5 à 7 mm, mais, le contraste est faible. Cette notion de contraste recouvre celle de rapport signal/bruit qui permet une appréciation quantitative de la qualité de l'image.

L'idée de la présente invention est de différencier par leur répartition spatiale et temporelle les photons non diffusés qui cheminent en ligne droite depuis le point d'interaction de ceux qui ont subi au moins une diffusion. A cette fin on utilise un photo-détecteur segmenté, de préférence un Si-PMT, et une information temporelle (temps d'arrivée des premiers photons UV) et non d'intensité lumineuse pour mesurer très précisément dans l'espace le lieu de l'interaction dans une plaque en (X, Y) mais aussi en Z (profondeur de l'interaction) du fait de la différence des trajets lumineux les plus courts et le temps exact T, (corrigé du temps de parcours auquel a eu lieu l'interaction).

L'invention utilise le fait qu'il existe maintenant des scintillateurs très rapides adaptés à l'application SPECT et des électroniques très rapides pour les lire (par exemple Si-PMT et circuit micro-électroniques dédiés de type ASIC), voir l'article « LaBr3 :Ce scintillation gamma camera prototype pour X and gamma ray imaging » ' R.Pani, M.N Cinti, R.Pellegrini, P.Bennatin... publié en février 2007*'.* Cet article montre des caractéristiques très prometteuses du cristal LaBr3:Ce comme imageur de rayons gamma. En particulier les excellentes valeurs de résolution d'énergie (6% à 140 keV et ∼ 3% à 662 keV) sont obtenues lorsque le cristal LaBr3:Ce est couplé à un PMT.

Les premiers photons UV émis après une interaction représentent une sphère dont le rayon grandit à la vitesse de la lumière dans le milieu considéré (LaBr3 indice = 1.9). Le temps d'arrivée de ces premiers photons à la base de la plaque scintillante (trigger) peut être mesuré à quelque dixaine de picosecondes, avec des détecteurs et une électronique adéquate. De même qu'avec l'intensité lumineuse, on peut construire une distribution spatiale et temporelle des n premiers photons détectés (xn, yn, tn). Du fait du saut d'indice entre le cristal et le couplage optique cristal/détecteur, il existe un angle limite ThetaL (θL) au-delà duquel les photons sont diffusés. Les photons non diffusés sont donc répartis dans un cône d'angle thetaL(θL) dont le sommet est le point d'interaction. Plus la différence de temps avec le premier trigger T1 est grande, plus on est loin du lieu d'interaction. Le minimum de cette distribution est le lieu de l'interaction. L'intérêt de ce système est que la distribution de la tâche des premiers photons, propagés en ligne droite depuis l'interaction, est beaucoup plus étroite que pour la tâche de lumière des intensités, ce qui améliore considérablement le contraste des images. Par ailleurs la double information obtenue, à la fois sur la tâche de lumière (GC) et sur la tâche temporelle (GCT) permet par un traitement statistique approprié, d'améliorer encore l'image.

De manière générale, les premiers photons remplissent donc une sphère dont le diamètre croit au cours du temps à une vitesse v= c/n. L'image de cette sphère sur le plan des détecteurs est un cercle dont le diamètre croit jusqu'à atteindre un angle limite Theta L. Ces photons UV se propagent à la vitesse de la lumière (c/n) dans le matériau avec par exemple n = 1.9, indice du milieu. L'ensemble des photons non diffusés est donc un cône dont le sommet est le point d'interaction et l'angle d'ouverture Theta L. Ensuite, on fait la différence entre les photons directs et les photons diffusés.

Les seuls photons directement détectés sont ceux qui sont émis dans un cône ayant le point d'interaction pour sommet et pour angle d'ouverture, l'angle de réflexion totale dans le cristal scintillateur ThetaL= arcsin (n2/n1), avec n2 = 1.4 et n1 = 1.9 pour LaBr3. Tous les autres photons subissent au moins une diffusion avant d'être détectés. Ceci a deux conséquences : 1) Ils ont un trajet optique plus long (avec une propagation à c/n) et donc sont détectés plus tard; 2) Ils ont une probabilité élevée d'être diffusés hors du cône de lumière. Le cône de lumière renferme donc une surdensité de photons.

Pour traiter la diffusion des photons, le plus simple est de considérer que quand ils touchent la surface supérieure, ils sont réémis sur 2π stéradian vers la face inférieure avec une équiprobabilité quant à la direction.

### Méthode de calcul du positionnement spatio-temporel d'une interaction (X,Y,Z,T). Les valeurs numériques correspondent à une plaque épaisse utilisée pour une modalité type PET.

Pour chaque interaction, on mesure :
1) Une première interaction (X1, Y1, T1) ;
2) La position (Xn, yn, Tn) des n premiers photons détectés pendant une durée comprise entre 200ps et 1000ps après cette première interaction ;
3) On traite statistiquement ces données de manière à définir le diamètre du cône de lumière (qui dépend de z) et son incertitude (qui donnera l'incertitude sur z) ;
4) Un premier estimateur de la position du centre du cône (xa, ya) basé sur le calcul du barycentre des points. Cette estimation peut ensuite être affinée en traitant les 10 premiers photons détectés. Ces photons ont a priori un trajet plus court que les autres et doivent vérifier une loi sur l'élargissement progressif du cône de détection. On affine donc le calcul pour obtenir (Xb, yb) et une estimation sur l'erreur de position commise ;
5) Connaissant (x,y,z) et la localisation complète de la détection du premier photon sur le plan des détecteurs (x1 ,y1, 30, t1) on peut estimer le temps t exact de l'interaction en (x,y,z) ainsi que l'erreur sur cette estimation du temps.

Enfin, il est possible de reconstituer l'événement en x,y autour de 2-3 mm avec une précision en z autour de 5 mm et en t autour de 30ps. Ainsi, on peut obtenir un détecteur de rayon gamma d'un facteur de 2 à 4 fois meilleur que l'existant.

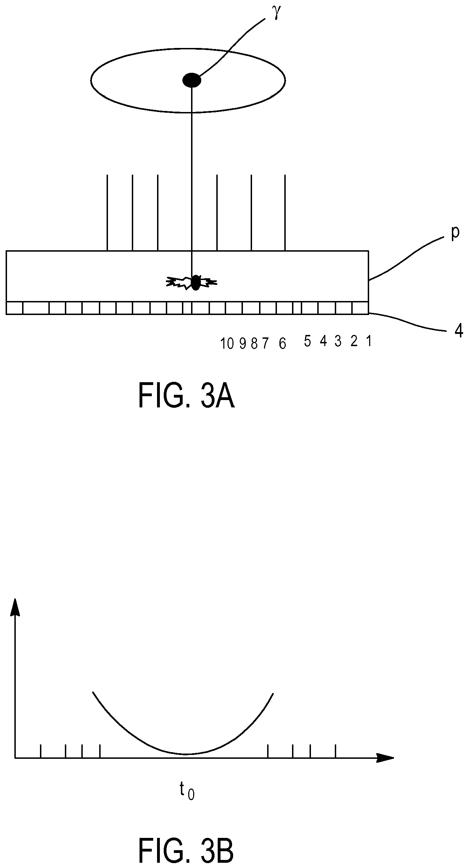

La figure 3A illustre la technique de SPECT Temporel de la présente invention, dans laquelle la plaque de scintillateur P (LaBr3) est d'épaisseur d'environ 30 mm, et le photo-détecteur 4 est de type SI-PMT segmenté. Les segments de SI-PMT sont de 20 x 20 mm en 16 canaux soit un canal = 4 mm x 4 mm. La lumière parallèle est émise de façon isotrope, c'est-à-dire que la source rayonne de façon isotrope dans un angle de 4π. La mesure est faite sur la première vague de photons émise c'est-à-dire sur le premier trigger temporel : cf le diagramme de la figure 3B. Dans le SPECT Temporel, on mesure aussi le barycentre, mais comme la granulite du détecteur est de 4mm x 4mm, la résolution temporelle des triggers est d'environ 20 ps ce qui équivaut à 4 mm dans le cristal LaBr3.

En outre, chacun des pixels de ce détecteur dispose, au moyen d'un composant microélectronique de type ASIC mixte analogique/digital dédié, d'une mesure précise à une dizaine de picosecondes du moment où le détecteur a été illuminé pour la première fois. Ceci permet une détection très rapide des premiers photons. Pour obtenir cette précision temporelle, il est nécessaire de compenser les temps de réponse des pixels et du canal de l'ASIC (composant micro électronique). Cette compensation est obtenue lors d'une phase de calibration en illuminant une zone avec une source collimatée. Sans sortir du cadre de l'invention une tête double peut être utilisée à cet effet.

Dans l'état actuel de l'art un scintillateur très rapide et avec peu d' afterglow, de préférence LaBr3, est nécessaire pour reconstituer une imagerie temporelle de l'interaction : cf article « LaBr3 :Ce scintillation gamma camera prototype pour X and gamma ray imaging » ' R.Pani, M.NCinti, R.Pellegrini, P.Bennatin... publié en février 2007'. Bien que le temps le plus court qu'il soit possible de mesurer avec un scintillateur rapide tel que LaBr3 sur un pixel de 25 mm est de 200ps, ce temps est dû en grande partie à l'incertitude quant à la localisation de l'interaction en tête ou en pied de pixel. Dans un scintillateur continu, en comparant les temps mesurés par des pixels de photo-détecteurs adjacents, il est possible de connaître la hauteur (z) où a lieu l'interaction et donc d'avoir une valeur précise à quelque dizaines de ps (10 ps = 2 mm dans LaBr3) du temps de l'interaction sur la face d'entrée du cristal. Dès lors que l'on dispose d'un modèle de fonctionnement du cristal, la précision de localisation temporelle est bien supérieure à celle de la résolution spatiale.

Dans les photo-détecteurs adjacents, il n'y a pas d'interface optique, par conséquent, c'est le trajet le plus direct qui compte.

Un autre intérêt de la présente invention est, qu'en ayant une cartographie temporelle et spatiale d'une interaction, il est possible de différencier deux événements voisins dans l'espace et dans le temps. Dans la logique d'Anger, si l'énergie n'est pas correcte, c'est-à-dire si l'énergie émise est différente de l'énergie du radio-isotope utilisé, on ne peut différencier deux événements voisins. Ceci contribue à la dispersion sur l'image.

Un autre intérêt de l'invention est qu'elle permet de corriger les effets de bords. Pour cela, on peut coller plusieurs plaques ensembles, les une à côtés des autres, pour reconstituer une grande surface, ce qui permet de corriger les effets de bords. Ceci est particulièrement avantageux dans le cas de cristaux relativement petits, par exemples pour des halogénures de Lanthanide.

En logique d'Anger, si on colle deux plaques de scintillateurs, la distribution de lumière est fortement perturbée par les réflexions partielles sur l'interface optique et donc la position spatiale de l'interaction déduite de la forme de la tache de lumière est fausse. Par contre, les trajets lumineux les plus directs qui traversent l'interface optique avec une incidence proche de la normale sont peu déviés. Donc le temps de vol mesuré depuis le lieu de l'interaction est correct. Il existe des zones de l'autre coté de la plaque (l'interface optique) que l'on peut utiliser pour reconstituer, à partir des trajets directs des photons, une localisation correcte de l'interaction.

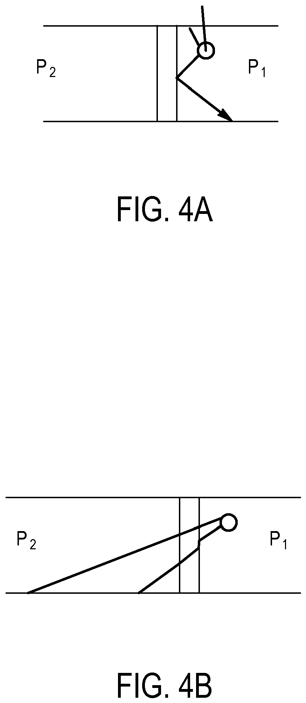

Les figures 4A et 4B illustrent une comparaison de l'effet de bord dans le cas de SPECT classique (4A) et le SPECT temporel de la présente invention (4B). Dans le cas de SPECT classique, (fig 4A), les plaques P1 et P2 sont collées bord à bord avec une colle à haut indice, on remarque qu'une grande partie de la lumière est réfléchie. Par conséquent, la distribution lumineuse est perturbée. Dans le cas de SPECT Temporel, (figure 4B), selon l'invention, le trajet des premiers photons émis est peu perturbé, donc on peut correctement reconstituer le minimum temporel, ainsi on peut corriger les effets de bord.

La réalisation du système de détection à l'aide des détecteurs à semi conducteurs de type SI-PMT ou APD est particulièrement avantageuse car ils sont beaucoup plus compacts que les PM (photo-multiplicateur), donc les temps de transfert internes aux détecteurs sont plus courts. Ceci permet d'espérer une meilleure résolution temporelle. De plus, ces détecteurs ont une section de capture du rayonnement gamma négligeable ; ils peuvent donc être placés en frontal, comme dans le cas d'un système Compton à deux plaques selon un mode de réalisation de l'invention.

Le système de détection décrit peut en outre fonctionner de la même manière pour la modalité PET sans collimateur. En effet, le traitement induit une pixellisation virtuelle de la plaque de détecteur qui évite d'avoir à la segmenter physiquement et économise des coûts importants. Par ailleurs, la mesure de la profondeur de l'interaction a lieu de manière naturelle avec un seul plan de détecteur, dans une configuration qui est celle d'un gamma caméra classique. Cette modalité permet d'obtenir les meilleures performances avec des scintillateurs moins denses et moins chers tels que l'halogénure de Lanthanide.

Le système de détection décrit peut en outre fonctionner de la même manière sans collimateur pour la modalité PET avec les avantages suivants.
- Dans un scintillateur de type LaBr3 dont le temps de montée au pic de lumière est environ 800 ps on améliore la résolution en énergie du détecteur en comptant le nombre de photon non diffusés détectés pendant une durée donnée supérieure au rise time (temps de montée au pic de lumière) du scintillateur (800 ps pour LaBr3), en ne considérant que les événements détectés dans le cône de lumière. De manière générale, dans un détecteur plan monolithique, la résolution en énergie est dégradée par rapport à l'optimum théorique. La résolution en énergie est en effet liée au nombre de photons détectés pour un événement d'énergie donnée. Dans un détecteur plan la plupart des photons détectés ont subi de multiples diffusions depuis leur lieu d'émission. Lors de ces diffusions, un pourcentage variable de photons est perdu. La présente invention fournit une solution, en comptant uniquement les photons non diffusés issus du cône de lumière, on retrouve la proportionnalité nombre de photons/énergie propre au scintillateur. Ainsi on peut obtenir une résolution en énergie de l'ordre de 3% avec LaBr3 :Ce.

Un autre intérêt de l'invention est que dans le cas d'utilisation de la technique PET, le détecteur à semi conducteur, plan mono-plaque, peut être substitué aux détecteurs segmentés. On peut par exemple placer autour du patient un cylindre polygonal formé de plaques de détecteurs, de manière à reconstituer un anneau. Ce type de détecteur permet d'obtenir des performances particulièrement élevées en termes de Time of Flight (intra anneau) du fait de l'utilisation de LaBr3 et de la correction de la profondeur d'interaction du rayonnement et de la localisation temporelle particulièrement précise

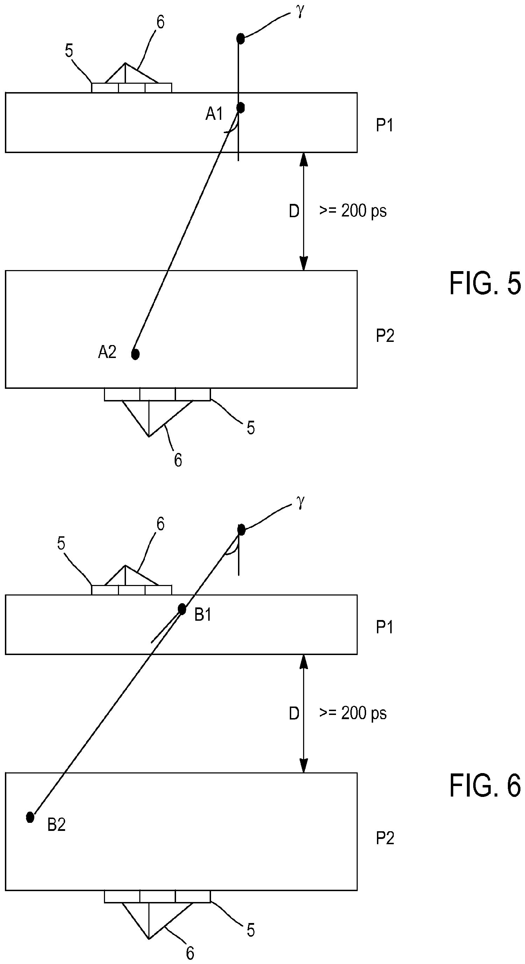

La figure 5 représente un autre mode de réalisation de l'invention selon lequel, le système de détection comprend notamment : deux plaques de scintillateurs P1 et P2, des matrices de photo-détecteur SI-PMT 5 et l'électronique associée 6, collés à chaque plaque P1 et P2. La première plaque P1 est fine et présente une épaisseur supérieure à 5 mm. Sur cette première plaque on mesure : l'instant d'impact du rayon gamma, le premier trigger T1; une distribution spatiale des triggers, afin de situer un événement e1 en (X1, Y1) ; une distribution spatiale de la luminosité en A1 (X'1, Y'1); ainsi que l'intégrale de l'énergie (E1) émise lors de l'événement dans la plaque P1. Un tel système comprend en outre une seconde plaque de scintillateur P2, plus épaisse que la première. Ladite seconde plaque P2, présente une épaisseur supérieure à 10 mm et permet d'absorber plus de 80% de l'énergie du photon gamma grâce à son épaisseur suffisante. La deuxième plaque P2 est séparée de la première plaque P1 par une distance 'D' d'au moins 10 mm nécessaire pour détecter le trigger sur la deuxième plaque. Sur cette deuxième plaque P2 on mesure : l'instant d'impact du rayon gamma, c'est-à-dire un premier trigger T2; Une distribution spatiale des triggers en (X2, Y2, Z2) ; Une distribution spatiale de la luminosité en A2 (X'2, Y'2) ; ainsi que l'intégrale de l'énergie (E2) émise lors de l'événement dans cette plaque. Ensuite on effectue un tri pour savoir si l'événement est valide. Le tri est effectué grâce aux deux tests suivants :
E1 + E2 = Energie du radio-isotope utilisé
et T2 = T1+temps de propagation de la lumière entre l'événement e1 et l'événement e2.
Si l'événement est valide, on peut calculer le vecteur de propagation du rayon gamma dans le système. De plus, le ratio des énergies (E1/E1+E2) permet d'estimer la déviation Compton (angle α) avec une précision dα par rapport à la direction initiale du rayon gamma. On sait alors que l'interaction a eu lieu dans une direction comprise dans un cône d'axe A1A2 et d'angle compris entre α-dα et α+dα. Les évènements les plus intéressants en terme d'imagerie sont bien entendus ceux où α est petit, d'où l'intérêt d'une plaque d'entrée mince. Puisqu'on obtient au final un grand nombre d'événements, on peut, par conséquent, reconstituer une image.

Une fois que la position des triggers spatiaux et temporels a été documentée, on peut intégrer l'ensemble du rayonnement émis afin de mesurer précisément l'énergie, en rejetant les variations compton. De préférence dans un tel système à deux plaques, les plaques sont installées face à face et les photo-détecteurs sont placés vers l'extérieur du volume défini par les deux plaques P1 et P2 disposées en vis-à-vis.

Pour qu'un tel système selon l'invention fonctionne, tout d'abord il faut disposer de scintillateurs très rapides, très lumineux, et avec un faible afterglow, tels que l'Oxyde de lutétium (LYSO, LSO), de préférence, les halogénures de lanthanide (Lul3, LaBr3, LaCl3). Les photo-détecteurs doivent être rapides, compacts, à faible section de capture du rayonnement gamma. Dans la configuration comportant deux plaques P1, P2, les photo-détecteurs sont traversés par le rayonnement gamma, avec une grande homogénéité de réponse temporelle de canal à canal.

Dans certains modes de réalisation de l'invention, des photo-détecteurs classiques (PMT) peuvent être utilisés, mais les photo-détecteurs à semi conducteurs (Si-PMT) sont préférés.

La qualité de l'électronique de traitement des photo-détecteurs à semi conducteurs, Si-PMT, doit : avoir une résolution temporelle sur la détection du premier photon (trigger) supérieure à 20 ps ; être très proche des Si-PMT pour éviter des délais dus au transport des charges ; et avoir une faible absorption du rayonnement gamma. Ceci conduit à privilégier des solutions microélectroniques de type ASIC.

Actuellement les scintillateurs les plus performants sont hygroscopiques et on intercale une plaque de verre entre le cristal et le photo-détecteur. Dans l'invention, la réalisation préférée comprend une plaque épaisse (typiquement 30 mm pour LaBr3 pour 511 KeV) avec un photodétecteur, Si-PMT, collé directement sur le cristal pour limiter les réflexions dues aux interfaces optiques. Le cristal, les SI-PMT et les composants microélectroniques, ASIC, sont donc préférentiellement disposés dans une enceinte étanche.

Sachant qu'il faut éviter la diffusion Compton entre les deux plaques, l'espace inter plaque est vide ou rempli de gaz inerte de faible numéro atomique tel que Helium, Neon, Argon. La séparation des plaques, la distance entre les deux plaques P1 et P2, doit être suffisante pour qu'on puisse différencier clairement les triggers T1 et T2. Pour l'halogénure de lanthane LaBr3, un temps de propagation de 200 ps équivalent à environ 60 mm dans l'air est privilégié.

Etant donné la plus grande compacité des détecteurs et de l'électronique de traitement vis-à-vis d'une caméra classique, un tel ensemble plaques/détecteur/électronique pourra remplacer les dispositifs actuellement présents sur les caméras existantes.

Un autre intérêt du système selon invention, est son application dans des domaines dans lesquels le nombre de photon gamma à détecter est faible tels que l'astronomie.

Le système selon l'invention avec une ou deux plaques, peut être utilisé pour un examen de type PET. Dans ce cas, une plaque de scintillateur rapide tel que LaBr3, doit présenter une épaisseur supérieure à 20 mm pour pouvoir arrêter des photons de 511Kev. Dans le cas d'une seule plaque de scintillateur, la présence d'un collimateur est nécessaire. Si on utilise un système à 2 plaques, le collimateur n'est plus utile. Que le détecteur contienne une ou deux plaques, il doit être installé en vis-à-vis de chaque côté du patient.

De nombreuses combinaisons peuvent être envisagées sans sortir du cadre de l'invention tel qu'il est défini par les revendications; l'homme de métier choisira l'une ou l'autre en fonction des contraintes économiques, ergonomiques, dimensionnelles ou autres à respecter.

## Revendications

1. *Système de détection de rayon gamma, de type gamma caméra, comprenant*
• *une source de rayon gamma,*
• *au moins une plaque de scintillateur rapide (P1)* présentant un temps de montée au pic de lumière qui est inférieur à 1ns :
- *dans lequel une interaction avec ledit rayon gamma produit des évènements de scintillation qui génère des* photons UV,
- *comprenant une face de rentrée diffusante et une face de sortie polie,*
- *présentant une épaisseur supérieure ou égale à 10 mm,*
• *un photo-détecteur comprenant une pluralité de segments détectant les photons émis par ladite plaque (P1),*
• *une micro-électronique de lecture dédiée de type ASIC, recueillant les détections de photons du photo-détecteur,*
*le système étant **caractérisé en ce que** :*
• *le photo-détecteur et la micro-électronique de lecture sont aptes à recueillir les photons de ladite plaque (P1)*,
• *le système est apte à :*
- *mesurer un premier trigger T1, correspondant à l'instant d'impact du premier photon détecté sur chacun des segments du photo-détecteur,*
- *mesurer une distribution spatiale et temporelle des premiers photons reçus sur les segments voisins, suite à ce premier trigger T1, pendant une durée déterminée, supérieure à 100 ps et inférieure ou égale au temps de montée au pic de lumière du scintillateur, afin de déterminer les coordonnées spatiales (X1, Y1) d'un événement « e1 »,*
- *exploiter les différences de répartition spatiales et temporelles des premiers photons détectés autour de l'évènement « e1 » et grâce à ladite durée déterminée, de discriminer les photons non diffusés et des photons diffusés et déterminer le rayon d'un disque centré autour de l'évènement « e1 » et dans lequel sont concentrés les photons non diffusés, puis de déterminer la distance (ou profondeur d'interaction Z) à laquelle s'est produite l'interaction ayant généré les photons détectés et ainsi reconstituer les coordonnées spatio-temporelles (X1, Y1, Z1, T1) dudit événement de scintillation produit par ladite interaction.*

2. *Système selon la revendication 1, **caractérisé en ce qu'**il est apte à mesurer l'instant exact T de ladite interaction en reconstituant la trajectoire dans le cristal scintillateur sur la base des coordonnées spatio-temporelles (X1, Y1, Z1, T1) estimées à partir des dix premiers photons détectés.*

3. *Système selon l'une des revendications 1 ou 2, **caractérisé en ce que** la plaque P1 est de type Halogénure de Lanthanide les segments du photo-détecteur étant répartis selon un pas inférieur à la moitié de son épaisseur, de préférence inférieur à 4 mm et la micro-électronique de lecture dédiée de type ASIC comprenant une pluralité de canaux dédiés chacun à l'un des segments, avec une partie analogique ayant une résolution temporelle pour chaque canal inférieure à 50 ps.*

4. *Système selon l'une des revendications précédentes, **caractérisé en ce qu'**il est apte à mesurer en outre une distribution spatiale de la luminosité A1 en (X'1, Y'1) et calculer l'intégrale de l'énergie E1 comme dans une gamma caméra classique.*

5. *Système de détection selon l'une des revendications précédentes, **caractérisé en ce que** le photo-détecteur est un détecteur à semi-conducteur de type SI-PMT ou APD.*

6. *Système de détection selon la revendication 1, **caractérisé en ce qu'**il comporte une multitude de plaques de scintillateurs collées bord à bord afin d'étendre la surface dans laquelle les interactions peuvent se former et de limiter les effets de bord qui seraient produits sur la même surface par une plaque unique, ladite surface pouvant être agencée soit dans un plan pour une application SPECT soit dans un anneau pour une application PET.*

7. *Système de détection selon la revendication 1, **caractérisé en ce que*** :
• *Il comprend en outre*
- *une seconde plaque de scintillateur P2 d'une épaisseur permettant d'absorber au moins 80% de l'énergie du rayon gamma, ladite seconde plaque étant séparée de la première plaque P1 par une distance 'D' d'au moins 10 mm,*
- *un module d'estimation permettant de déterminer un événement valide,*
- *un module d'estimation de la déviation Compton,*
• *il est apte à mesurer, sur ladite seconde plaque P2 un premier trigger T2, une distribution spatiale des triggers permettant de situer spatialement un événement « e2 » en (X2, Y2, Z2), une distribution spatiale de la luminosité A2 en (X'2, Y'2) ainsi que l'énergie E2 émise lors de l'événement « e2 » dans ladite plaque P2*
• *ladite deuxième plaque P2 permet d'obtenir des informations sur le trajet du rayon gamma sans perdre d'information sur les rayons qui n'ont pas interagi avec la première plaque (P1).*

8. *Système de détection selon la revendication 7, **caractérisé en ce qu'**il comprend un module de calcul d'événement valide, dans lequel les vecteurs des distributions temporelles, l'instant d'impact de rayon gamma sur les plaques, et les vecteurs des distributions spatiales sont corrélées afin d'améliorer la précision de la localisation de l'interaction dans lesdites plaques.*

9. *Système selon l'une des revendications précédentes, **caractérisé en ce que** les plaques (P1) ou (P1 et P2), les photo-détecteurs et les composants électroniques sont disposés dans une enceinte étanche.*

10. *Procédé de reconstitution de l'image, dans un système selon l'une des revendications 1 à 9 et **caractérisé par** les étapes suivantes mises en œuvre lors de l'impact d'un photon gamma* :
• *dans la plaque (P1):*
- *mesurer un premier trigger T1, correspondant à l'instant d'impact du premier photon* UV *sur le plan des détecteurs segmentés sur ladite plaque P1 ;*
- *mesurer une distribution spatiale et temporelle des impacts de photons,dits, triggers sur les segments voisins dans le plan des photo-détecteurs, afin de situer spatialement un événement « e1 » en (X1, Y1) sur la normale du minimum de la distribution des triggers;*
- *mesurer en outre une distribution spatiale de la luminosité A1 en (X'1, Y'1) et l'intégrale de l'énergie E1 ;*
• *dans la plaque P2 :*
- *mesurer un premier trigger T2 ;*
- *mesurer une distribution spatiale et temporelle des triggers afin de situer spatialement un événement « e2 » en (X2, Y2, Z2) ;*
- *mesurer une distribution spatiale de la luminosité A2 en (X'2, Y'2) ainsi que l'énergie E2 émise lors de l'événement « e2 » dans ladite plaque P2 ;*
- *déterminer un événement valide à l'aide de module d'estimation en effectuant les deux tests suivants :*
*a) T2* = *T1* + *temps de propagation de la lumière entre e1 et e2 ;*
*b) E1* + *E2* = *Energie du radio isotope utilisé,*
- *déterminer la déviation Compton d'un angle « alpha » avec une précision dα par rapport à la direction initiale du rayon gamma, le ratio des énergies (E1*/*E1+E2) permettant d'estimer la déviation Compton ;*
- *définir des informations sur le trajet du rayon gamma.*

11. *Utilisation du système selon l'une des revendications 1 à 9 dans un système d'imagerie médicale de type SPECT ou de type PET.*

12. *Utilisation du système selon l'une des revendications 1 à 9 dans des domaines dans lesquels le nombre de photons gamma à détecter est faible, tel que l'astronomie.*

## Patentansprüche

1. Gammastrahlendetektionssystem, vom Typ Gammakamera, umfassend
• eine Gammastrahlenquelle,
• mindestens eine Platte (P1) eines schnellen Szintillators mit einer Anstiegszeit an der Lichtspitze, die weniger als 1 ns beträgt:
- wobei eine Wechselwirkung mit dem Gammastrahl Szintillationsereignisse erzeugt, die UV-Photonen erzeugt,
- umfassend eine diffundierende Rücklauffläche und eine polierte Austrittsfläche,
- mit einer Dicke größer oder gleich 10 mm,
• einen Fotodetektor, der mehrere Segmente umfasst, die die von der Platte (P1) emittierten Photonen erfassen,
• eine zugeordnete Lesemikroelektronik vom Typ ASIC, die die Photonendetektionen vom Fotodetektor aufnimmt,
wobei das System **dadurch gekennzeichnet ist, dass**:
• der Fotodetektor und die Lesemikroelektronik dazu geeignet sind, die Photonen von der Platte (P1) aufzunehmen,
• das System dazu geeignet ist:
- einen ersten Trigger T1 zu messen, der dem Zeitpunkt des Aufpralls des ersten auf jedem der Fotodetektorsegmente erfassten Photons entspricht,
- nach dem ersten Trigger T1, eine räumliche und zeitliche Verteilung der ersten auf den benachbarten Segmenten empfangenen Photonen für einen bestimmtem Zeitraum größer als 100 ps und kleiner oder gleich der Anstiegszeit an der Lichtspitze des Szintillators zu messen, um die Raumkoordinaten (X1, Y1) eines Ereignisses "e1" zu bestimmen,
- die Unterschiede in der räumlichen und zeitlichen Verteilung der ersten um das Ereignis "e1" erfassten Photonen zu nutzen, und dank dem bestimmten Zeitraum die nicht gestreuten Photonen und gestreuten Photonen zu unterscheiden und den Radius einer um das Ereignis "e1" zentrierten Platte zu bestimmen, in der die nicht gestreuten Photonen konzentriert sind, dann die Entfernung (oder Interaktionstiefe Z) zu bestimmen, in der die Wechselwirkung stattgefunden hat, die die erfassten Photonen erzeugt hat, und somit die räumlich-zeitlichen Koordinaten (X1, Y1, Z1, T1) des durch die Wechselwirkung erzeugten Szintillationsereignisses nachvollzuziehen.

2. System nach Anspruch 1, **dadurch gekennzeichnet, dass** es dazu geeignet ist, den genauen Zeitpunkt T der Wechselwirkung durch Rekonstruktion der Flugbahn in dem Szintillatorkristall aufgrund der aus den ersten zehn erfassten Photonen geschätzten räumlich-zeitlichen Koordinaten (X1, Y1, Z1, T1) zu messen.

3. System nach einem der Ansprüche 1 oder 2, **dadurch gekennzeichnet, dass** die Platte P1 vom Typ Lanthanidhalogenid ist, wobei die Segmente des Fotodetektors in einem Abstand von weniger als die Hälfte seiner Dicke, vorzugsweise weniger als 4 mm, verteilt sind, und die dedizierte Lesemikroelektronik vom Typ ASIC eine Vielzahl von Kanälen umfasst, die jeweils einem der Segmente zugeordnet sind, mit einem analogen Teil mit einer Zeitauflösung für jeden Kanal von weniger als 50 ps.

4. System nach einem der vorherigen Ansprüche, **dadurch gekennzeichnet, dass** es weiterhin dazu geeignet ist, eine räumliche Verteilung der Helligkeit A1 in (X'1, Y'1) zu messen und das Integral der Energie E1 wie bei einer herkömmlichen Gammakamera zu berechnen.

5. Detektionssystem nach einem der vorherigen Ansprüche, **dadurch gekennzeichnet, dass** der Fotodetektor ein Halbleiterdetektor vom Typ SI-PMT oder APD ist.

6. Detektionssystem nach Anspruch 1, **dadurch gekennzeichnet, dass** es eine Vielzahl von Kante an Kante angeordneten Szintillatorplatten umfasst, um die Oberfläche zu erweitern, in der die Wechselwirkungen stattfinden können und die Kanteneffekte zu minimieren, die durch eine einzelne Platte auf derselben Oberfläche erzeugt werden würden, wobei die Oberfläche entweder in einer Ebene für eine SPECT-Anwendung oder in einem Ring für eine PET-Anwendung angeordnet werden kann.

7. Detektionssystem nach Anspruch 1, **dadurch gekennzeichnet, dass**:
• es weiterhin umfasst:
- eine zweite Szintillatorplatte P2 mit einer Dicke, die es ermöglicht, mindestens 80% der Energie des Gammastrahles zu absorbieren, wobei die zweite Platte von der ersten Platte P1 durch einen Abstand 'D' von mindestens 10 mm getrennt ist,
- ein Schätzmodul zur Bestimmung eines gültigen Ereignisses,
- ein Compton-Abweichungsschätzungsmodul,
• es dazu geeignet ist, einen ersten Trigger T2 auf der zweiten Platte P2 zu messen, wobei eine räumliche Verteilung der Trigger eine räumliche Lokalisierung eines Ereignisses "e2" in (X2, Y2, Z2), eine räumliche Verteilung der Helligkeit A2 in (X'2, Y'2) ermöglicht, sowie die während des Ereignisses "e2" in der Platte P2 abgegebene Energie E2
• die zweite Platte P2 es ermöglicht, Informationen über den Weg des Gammastrahls zu erhalten, ohne Informationen über die Strahlen zu verlieren, die nicht mit der ersten Platte (P1) interagiert haben.

8. Detektionssystem nach Anspruch 7, **dadurch gekennzeichnet, dass** es ein Modul zur Berechnung eines gültigen Ereignisses umfasst, wobei die Vektoren der zeitlichen Verteilungen, der Zeitpunkt des Aufpralls des Gammastrahls auf die Platten und die Vektoren der räumlichen Verteilungen korreliert sind, um die Genauigkeit der Lokalisierung der Wechselwirkung in den Platten zu verbessern.

9. System nach einem der vorherigen Ansprüche, **dadurch gekennzeichnet, dass** die Platten (P1) oder (P1 und P2), die Fotodetektoren und die elektronischen Komponenten in einem versiegelten Gehäuse angeordnet sind.

10. Bildrekonstruktionsmethode in einem System nach einem der Ansprüche 1 bis 9 und durch die folgenden Schritten gekennzeichnet, die während des Aufpralls eines Gammaphotons ausgeführt werden:
• in der Platte (P1):
- Messen eines ersten Trigger T1, der dem Zeitpunkt des Aufpralls des ersten UV-Photons auf der Ebene der segmentierten Fotodetektoren auf der Platte P1 entspricht;
- Messen einer räumlichen und zeitlichen Verteilung der Photonenaufpralle, sogenannte Trigger, auf den benachbarten Segmenten in der Ebene der Fotodetektoren, um ein Ereignis "e1" in (X1, Y1) auf der Normalen des Minimums der Verteilung der Trigger räumlich zu lokalisieren;
- weiterhin Messen einer räumlichen Verteilung der Helligkeit A1 in (X'1, Y'1) und des Integrales der Energie E1;
• in der Platte P2:
- Messen eines ersten Trigger T2;
- Messen einer räumlichen und zeitlichen Verteilung der Trigger, um ein Ereignis "e2" in (X2, Y2, Z2) räumlich zu lokalisieren;
- Messen einer räumlichen Verteilung der Helligkeit A2 in (X'2, Y'2) sowie der während des Ereignisses "e2" in der Platte P2 abgegebenen Energie E2;
- Bestimmen eines gültigen Ereignisses mittels Schätzmodulen durch Durchführung der zwei folgenden Teste:
a) T2 = T1 + Lichtausbreitungszeit zwischen e1 und e2;
b) E1 + E2 = Energie des verwendeten Radioisotops,
- Bestimmen der Compton-Abweichung eines Winkels "alpha" mit einer Genauigkeit dα gegenüber der Anfangsrichtung des Gammastrahls, wobei das Verhältnis der Energien (E1/E1+E2) die Schätzung der Compton-Abweichung ermöglicht;
- Definieren von Informationen über den Weg des Gammastrahls.

11. Verwendung des Systems nach einem der Ansprüche 1 bis 9 in einem medizinischen Bildgebungssystem vom Typ SPECT oder PET.

12. Verwendung des Systems nach einem der Ansprüche 1 bis 9 in Bereichen, in denen die Anzahl der zu detektierenden Gammaphotonen gering ist, wie Astronomie.

## Claims

1. Gamma ray detection system, of the gamma camera type, comprising
• a gamma ray source,
• at least one fast scintillator plate (P1) having a time of rising to the light peak which is less than 1 ns:
- in which an interaction with said gamma ray produces scintillation events which generate UV photons,
- comprising a diffusing entry surface and a polished exit surface,
- having a thickness greater than or equal to 10 mm,
• a photodetector comprising a plurality of segments detecting the photons emitted by said plate (P1),
• dedicated reader microelectronics of the ASIC type, receiving the photon detections of the photodetector,
the system being **characterised in that**:
• the photodetector and the reader microelectronics are capable of receiving the photons of said plate (P1),
• the system is capable of:
- measuring a first trigger T1, corresponding to the moment of impact of the first photon detected on each of the segments of the photodetector,
- measuring a spatial and temporal distribution of the first photons received on the adjacent segments, following this first trigger T1, for a given length of time greater than 100 ps and less than or equal to the time of rising to the light peak of the scintillator, in order to determine the spatial coordinates (X1, Y1) of an event "el",
- using the differences in spatial and temporal distribution of the first photons detected around the event "e1" due to said given length of time, discriminating between the scattered photons and unscattered photons and determining the radius of a disc centred around the event "e1" in which the unscattered photons are concentrated, then determining the distance (or depth of interaction Z) at which the interaction which generated the photons detected occurred, and thus reconstructing the spatiotemporal coordinates (X1, Y1, Z1, T1) of said scintillation event produced by said interaction.

2. System according to claim 1, **characterised in that** it is capable of measuring the exact moment T of said interaction by reconstructing the trajectory in the scintillator crystal on the basis of the spatiotemporal coordinates (X1, Y1, Z1, T1) estimated from the first ten photons detected.

3. System according to one of claims 1 or 2, **characterised in that** the plate P1 is of the lanthanide halide type, the segments of the photodetector being distributed at an interval of less than half its thickness, preferably less than 4 mm, and the dedicated reader microelectronics of the ASIC type comprising a plurality of channels each dedicated to one of the segments, with an analogue part having a temporal resolution for each channel of less than 50 ps.

4. System according to one of the preceding claims, **characterised in that** it is capable of further measuring a spatial distribution of luminosity A1 at (X'1, Y'1) and calculating the integral of energy E1 as in a traditional gamma camera.

5. Detection system according to one of the preceding claims, **characterised in that** the photodetector is a semiconductor detector of the SI-PMT or APD type.

6. Detection system according to claim 1, **characterised in that** it comprises a plurality of scintillator plates glued edge to edge in order to extend the surface area in which the interactions can form and to limit the edge effects which would be produced on the same surface area by a single plate, said surface area capable of being arranged either in a plane for a SPECT application or in a ring for a PET application.

7. Detection system according to claim 1, **characterised in that**:
• it further comprises
- a second scintillator plate P2 having a thickness which makes it possible to absorb at least 80% of the gamma ray energy, said second plate being separated from the first plate P1 by a distance 'D' of at least 10 mm,
- an estimating module making it possible to determine a valid event,
- a module for estimating the Compton deviation,
• it is capable of measuring, on said second plate P2, a first trigger T2, a spatial distribution of triggers making it possible to spatially situate an event "e2" at (X2, Y2, Z2), a spatial distribution of luminosity A2 at (X'2, Y'2) as well as the energy E2 emitted during the event "e2" in said plate P2,
• said second plate P2 makes it possible to obtain information about the path of the gamma ray without losing information about the rays which have not interacted with the first plate (P1).

8. Detection system according to claim 7, **characterised in that** it comprises a module for calculating a valid event, in which the vectors of temporal distributions, the moment of gamma ray impact on the plates and the vectors of spatial distributions are correlated in order to improve the precision of location of the interaction in said plates.

9. System according to one of the preceding claims, **characterised in that** the plates (P1) or (P1 and P2), the photodetectors and the electronic components are disposed in a sealed enclosure.

10. Method for reconstructing the image, in a system according to one of claims 1 to 9, **characterised by** the following steps implemented upon impact of a gamma photon:
• in the plate (P1):
- measuring a first trigger T1, corresponding to the moment of impact of the first UV photon on the plane of the segmented detectors on said plate P1;
- measuring a spatial and temporal distribution of the photon impacts called triggers on the adjacent segments in the plane of the photodetectors, in order to spatially situate an event "e1" at (X1, Y1) on the normal of the minimum of trigger distribution;
- further measuring a spatial distribution of luminosity A1 at (X'1, Y'1) and the integral of energy E1;
• in the plate P2:
- measuring a first trigger T2;
- measuring a spatial and temporal distribution of the triggers in order to spatially situate an event "e2" at (X2, Y2, Z2);
- measuring a spatial distribution of luminosity A2 at (X'2, Y'2) as well as the energy E2 emitted during the event "e2" in said plate P2;
- determining a valid event with the aid of the estimating module by performing the following two tests:
a) T2 = T1 + light propagation time between e1 and e2;
b) E1 + E2 = energy of the radioisotope used,
- determining the Compton deviation of an angle "alpha" with a precision dα compared with the initial direction of the gamma ray, the ratio of energies (E1/E1+E2) making it possible to estimate the Compton deviation;
- defining the information about the path of the gamma ray.

11. Use of the system according to one of claims 1 to 9 in a medical imaging system of the SPECT type or of the PET type.

12. Use of the system according to one of claims 1 to 9 in the fields in which the number of gamma photons to be detected is low, such as astronomy.
